# EUROPEAN PATENT SPECIFICATION

(11) **EP 2 222 099 B1**
(45) Date of publication and mention of the grant of the patent: **20.06.2012**
(21) Application number: 08851079.7
(22) Date of filing: 23.10.2008
(51) Int. Cl.: H04L 12/24, H04L 29/14, H04L 29/08, H04L 12/26

(54) **A METHOD, DEVICE AND SYSTEM OF DISASTER RECOVERY AND HANDOVER CONTROL**
VERFAHREN, EINRICHTUNG UND SYSTEM ZUR WIEDERHERSTELLUNG NACH DESASTERN UND HANDOVER-STEUERUNG
PROCÉDÉ, DISPOSITIF ET SYSTÈME DE REPRISE APRÈS SINISTRE ET DE CONTRÔLE DE TRANSFERT

(30) Priority: 15.11.2007 CN 200710177438
(43) Date of publication of application: 25.08.2010
(73) Proprietor: Huawei Technologies Co., Ltd., Longgang District, Shenzhen Guangdong 518129 (CN)
(72) Inventor: WU, Xiaojing, Shenzhen Guangdong 518129 (CN); XIE, Feng, Shenzhen Guangdong 518129 (CN); LI, Xiaoming, Shenzhen Guangdong 518129 (CN)
(74) Representative: Körber, Martin Hans
(86) International application number: PCT/CN2008/072797
(87) International publication number: WO 2009/065338

(56) References cited:
- WO-A1-2006/120462
- WO-A1-2007/111086
- CN-A- 1 434 393
- CN-A- 1 527 618
- US-A- 5 896 441
- US-A1- 2006 040 711
- US-A1- 2007 217 437
- US-A1- 2007 220 303
- US-A1- 2007 245 392

## Description

### Field of the Invention

The present invention relates to communication technology, and in particular, to a method, system and device for processing disaster recovery switchover.

### Background of the Invention

Intelligent Network, evolved from the telephone network which is composed of exchange nodes, Signal System #7 and service control computer, refers to an intelligent telephone network or an integrated service digital network. Its network intelligence configuration is distributed in computers among several Service Control Points (SCPs) in a whole network and more flexible network intelligence control is implemented by software.

Accordingly, Intelligent Network is a service control network which is constructed over a switching network. Typically, one SCP or Application Server (AS) may be connected to multiple Service Switching Points (SSP, also named service triggering point) or Soft Switching and in the meantime, connection may be established between SCPs, to process value-added services. With the release of more basic services, SCP is becoming critical in an Intelligent Network, and therefore it is important to maintain normal operation of the services processed by the SCP.

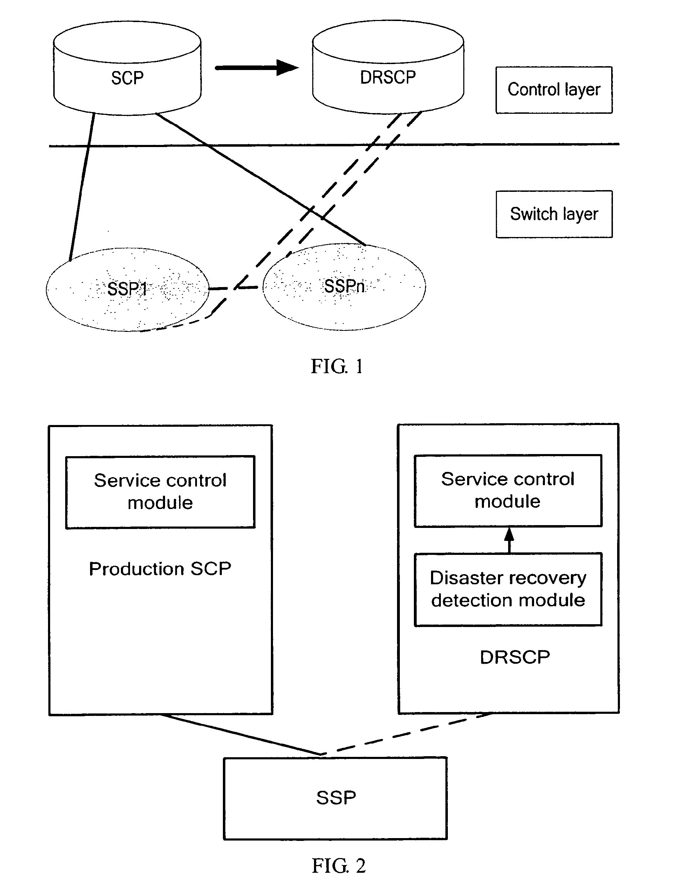

In the prior art, disaster recovery processing of the SCP is implemented in the manner of switching services in order to ensure normal operation of the services processed by the SCP. As shown in Figure 1, which is a schematic view of a conventional solution for processing disaster recovery switchover, Disaster Recovery Service Control Points (DRSCP) are disposed in an Intelligent Network, production SCPs on a control layer are backed up in the DRSCP; when the production SCPs encounter a disaster, the SSP switches and connects to the DRSCP and sends signals to the DRSCP; SSP services are processed by the DRSCP to implement the disaster recovery processing of the SCP.

Therefore, how to determine the occurrence of the disaster on the production SCP and how to start the DRSCP to take over and process services of the SCP are becoming critical issues in the disaster recovery in the Intelligent Network. One conventional method is that the SSP detects on the switching layer whether the connection between the SSP and SCP is normal or not. If abnormal, the SSP forwards the signals to the DRSCP via standby signal points, Global Title (GT) translation and etc. Because in the network multiple SSPs are configured with one SCP, the SSPs are independent of each other, it is possible that one of the SSPs sends the signals to the DRSCP and others send the signals to the production SCP due to intermittent interruption of the link between the production SCP and SSP. The difference of network call traffic between busy state and idle state is great, and therefore upon receiving a signal message, the DRSCP needs to determine whether to perform the disaster recovery switchover according to the received SSP signals, so as to avoid the case that the SSPs send, due to the intermittent interruption of link between the SCP and one SSP in the case of busy network, the signals to the DRSCP to make the DRSCP inappropriately triggers the disaster recovery switchover.

Therefore, the issue that how the DRSCP makes a decision according to the signal message received from the SSP is the precondition of accurately performing the disaster recovery switchover. A conventional method of making the decision by the DRSCP is illustrated as follows in combination with Figure 2. The DRSCP is provided with a disaster recovery detection module and a service control module of the DRSCP. The disaster recovery detection module analyzes the received signals and if it is detected that

the signal address received is identical to that configured on the DRSCP, correct signals are received and then the service control module of the DRSCP is started to take over the services. Further, the service control module is started to process services of the SSPs.

In the implementation of the above method for processing the disaster recovery switchover, the inventor(s) find at least the following problems in the prior art:

Because the disaster recovery detection module of the DRSCP triggers the disaster recovery switchover immediately upon receiving the signals from the SSPs, such condition for triggering the disaster recovery switchover is too sensitive. If the call traffic is large in the case of a busy network and the link between the SSPs and SCP is intermittently interrupted, the SSPs may send the signals to the DRSCP to trigger the disaster recovery switchover immediately, which is an inappropriately triggered disaster recovery switchover.

A WO application (WO 2006/120462 A1) discloses a controller for controlling the admit rate of messages passed to node in a communications system according to a control value that controls the maximum average admit rate, including the steps of periodically updating the control value in which the updated control value is the lesser of an increasing function of the previous control value; and an increasing function of the previous admit rate.

A US application (US 2007/220303 A1) discloses a server. The server includes a scenario table in which object to-be-monitored information that indicates one or more network devices A, B, and C being objects for failure recovery, failure information for identifying contents of failures, countermeasure information against failures , and frequence information that indicates the number of times of the recoveries from the failures based on the countermeasure information are corresponding stored. The network device A detects the failure of the network device itself and transmits a failure event to the server. The server selects the countermeasure information item in descending order of the frequence information items, by reference to the scenario table, and transmits the selected countermeasure information item to the network device A. the server repeats the selections and transmissions of the pertinent information item until the reception of the failure event from the network device A stops.

A US application (US 5896441 A) discloses a communication state management system for managing a state of a communication using an intelligent network which provides a service to convert a predetermined number which is preregistered into a number identifying a terminal as a destination, comprising: a plurality of service switching points(SSPs), each of said SSPs accommodating one or more terminals; a service control point (SCP) for receiving a predetermined number which is preregistered and information identifying an SSP which outputs the predetermined number from at least one of said plurality of SSPs, storing a number identifying a terminal obtained from the received predetermined number, a communication state of the terminal, and the received information identifying the SSP in a communication state management table by making a correspondence between them, and controlling the communication state by using the communication state management table, wherein said SCP updates communication states for all of the terminals accommodated in the SSP of the communication state management table when trouble relating to one of said plurality of SSPs occurs.

A US application (US 2006/040711 A1) discloses a method of real-time monitoring of operational status of an element of a communications network, comprising : receiving alarm or other operational status messages produced by the network element for a local log function, in real-time as the element generates the messages, via a streaming communication session, parsing each of the received messages to extract relevant operational data; populating fields of records in a database with the data extracted by the parsing; and providing a real-time display based on the received messages.

### Summary of the Invention

However, the teaching of closest prior art WO 2006/120462 lacks the capability of obtaining processing capability information of an application server and determining the disaster recovery switchover according to the processing capability information of the application serve r. Reliable detection and decision processing for the disaster recovery switchover is therefore not ensured.

It is therefore an object of the invention to provide a method, system and device for processing disaster recovery switchover to provide a reliable detection and decision processing for the disaster recovery switchover triggered by signals.

A method for processing disaster recovery switchover includes:
receiving and storing, by a disaster recovery server, the processing capability information of an application server;
   determining, by the disaster recovery server, a disaster recovery switchover threshold; and
   performing disaster recovery switchover if the disaster recovery server determines to trigger the disaster recover switchover to replace the application server to process services of the application triggering equipment according to the number of signals sent by application triggering equipment and the determined disaster recovery switchover threshold.

A device for processing disaster recovery switchover includes:
a disaster recovery analysis module, configured to obtain processing capability information of an application server, the processing capability information of the application server being used for a disaster recovery to determine a disaster recovery switchover threshold; and
a sending module, configured to send the processing capability information of the application server to the disaster recovery server.

An application server includes:
a server control module, configured to receive service signals from an application triggering equipment and provide the services;
a disaster recovery analysis module, configured to obtain processing capability information of an application server, the processing capability information of the application server being used for a disaster recovery to determine a disaster recovery switchover threshold; and
a sending module, configured to send the processing capability information of the application server to the disaster recovery server.

A device for processing disaster recovery switchover includes:
a disaster recovery detection module, configured to receive signals sent by application triggering equipment, and make statistics of the number of the received signals; and
a disaster recovery decision module, configured to preset a static disaster recovery switchover threshold or determine the disaster recovery switchover threshold according to processing capability information of an application server received; and perform the disaster recovery switchover if determining to trigger the disaster recover switchover replace the application server to process services of the application triggering equipment according to the statistics result from the disaster detection module and the determined disaster recovery switchover threshold.

A disaster recovery server includes:
a disaster recovery detection module, configured to receive signals sent by application triggering equipment, and make statistics of the number of the received signals;
a disaster recovery decision module, configured to preset a static disaster recovery switchover threshold or determine the disaster recovery switchover threshold according to processing capability information of an application server; and perform the disaster recovery switchover if determining to trigger the disaster recover switchover according to the statistics result from the disaster detection module and the determined disaster recovery switchover threshold; and
a service control module, configured to provide services after the disaster recovery decision module determines to trigger the disaster recovery switchover.

A system for processing disaster recovery switchover includes:
an application server, configured to obtain processing capability information of the application server; and send the processing capability information to a disaster recovery server;
application triggering equipment, configured to send signals to the disaster recovery server; and
the disaster recovery server, configured to receive the signals sent by the application triggering equipment; make statistics of the number of the received signals; determine a disaster recovery switchover threshold according to the processing capability information of the application server; and perform the disaster recovery switchover if determining to trigger the disaster recovery switchover according to the statistics result and the disaster recovery switchover threshold.

A method for processing disaster recovery switchover includes:
obtaining processing capability information of an application server, the processing capability information being used for a disaster recovery server to determine a disaster recovery switchover threshold; and
sending the processing capability information of the application server to the disaster recovery server to allow the disaster recovery server to determine the disaster recovery switchover threshold according to the processing capability information of the application server.

It may be seen from the technical solutions provided in the embodiments of the present invention, that the disaster recovery switchover may be provided with a reliable detection, decision processing by allowing the disaster recovery server to determine the disaster recovery switchover threshold and perform the disaster recovery switchover by use of the disaster recovery switchover threshold.

### Brief Description of the Drawings

Figure 1 is a structural view of an interworking scheme of a disaster recovery processing system in an Intelligent Network in the related art;
Figure 2 is a connection schematic view of the control points of a disaster recovery processing system in an Intelligent Network in the related art;
Figure 3a is a connection schematic view of a disaster recovery processing system;
Figure 3b is a flowchart of a method for disaster recovery switchover according to an embodiment of the present invention;
Figure 4a is connection schematic view of a disaster recovery processing system according to an embodiment of the present invention;
Figure 4b is flowchart of another method for disaster recovery switchover according to another embodiment of the present invention;
Figure 5 is a structural block diagram of a disaster recovery switchover apparatus according to embodiment 2 of the present invention;
Figure 6 is a structural block diagram of a disaster recovery switchover apparatus according to embodiment 3 of the present invention;
Figure 7 is a structural block diagram of another disaster recovery switchover apparatus according to embodiment 3 of the present invention;
Figure 8 is a structural block diagram of a disaster recovery switchover apparatus including a switchover threshold adjustment module according to embodiment 3 of the present invention; and
Figure 9 is a structural block diagram of another disaster recovery switchover apparatus according to embodiment 3 of the present invention.

### Detailed Description of the Invention

According to an embodiment of the present invention, a method for processing SCP disaster recovery switchover includes: determining, by a disaster recovery server, a disaster recovery switchover threshold; and performing disaster recovery switchover if the disaster recovery server determines to trigger the disaster recover switchover according to the number of signals sent by application triggering equipment and the determined disaster recovery switchover threshold.

Specifically, the process of determining the disaster recovery switchover threshold includes: determining the disaster recovery switchover threshold according to obtained processing capability information of an application server; or presetting a static disaster recovery switchover threshold.

For example, the disaster recovery server may determine the disaster recovery switchover threshold according to the obtained processing capability information of the application server in an Intelligent Network and a preset disaster recovery switchover threshold percentage. Particularly, a multiply product of the processing capability and the threshold percentage is the disaster recovery switchover threshold.

Still for example, the static disaster recovery switchover threshold may be set to the number of signals received per minute. When the number of the signals received by the disaster recovery server per minute reaches or exceeds the static disaster recovery switchover threshold, the disaster recovery switchover is triggered.

An embodiment of the present invention provides a method for processing disaster recovery switchover for performing disaster recovery switchover in the case of fault of an application server in the network. The method includes:
determining, by a disaster recovery server, a disaster recovery switchover threshold according to obtained processing capability information of an application server; and
performing disaster recover switchover if the disaster recovery server determines to trigger the disaster recover switchover according to the number of signals sent by application triggering equipment and the determined disaster recovery switchover threshold.

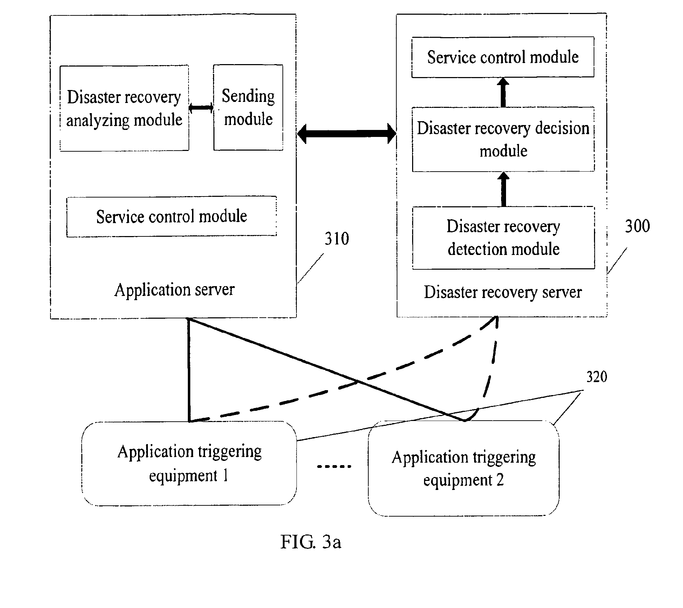

Referring to Figure 3a, a system schematic view of this method is illustrated. The disaster recovery processing may be performed by disposing a disaster recovery server 300.

The system for processing disaster recovery switchover as shown in Figure 3a includes an application server 310, application triggering equipment 320 and the disaster recovery server 300. The application triggering equipment 320 is configured to receive service signals sent by users, and send the service signals to the application server 310. The application server 310 is configured to provide related services according to the service signals. When a fault occurs on the application server 310 or the link between application triggering equipment 320 and the application server 310 is abnormal, the application triggering equipment 320 may send the service signals to the disaster recovery server 300. The disaster recovery switchover may be performed if the disaster recovery server 300 determines, according to the number of the service signals and disaster disaster recovery switchover threshold, to trigger the disaster recovery switchover. In other words, related services are provided by the disaster recovery server 300.

In a system for processing disaster recovery switchover provided in another embodiment of the present invention, the application server 310 is further configured to obtain processing capability information of the application server 310, and send the processing capability information to the disaster recovery server 300. The application triggering equipment 320 is configured to send signals to the disaster recovery server 300. The disaster recovery server 300 is configured to receive the signals sent by the application triggering equipment 320, make statistics of the received signals, determine the disaster recovery switchover threshold according to the processing capability information of the application server 310, and perform the disaster recovery switchover if determining, according to the statistics result and the disaster recovery switchover threshold, to trigger the disaster recovery switchover.

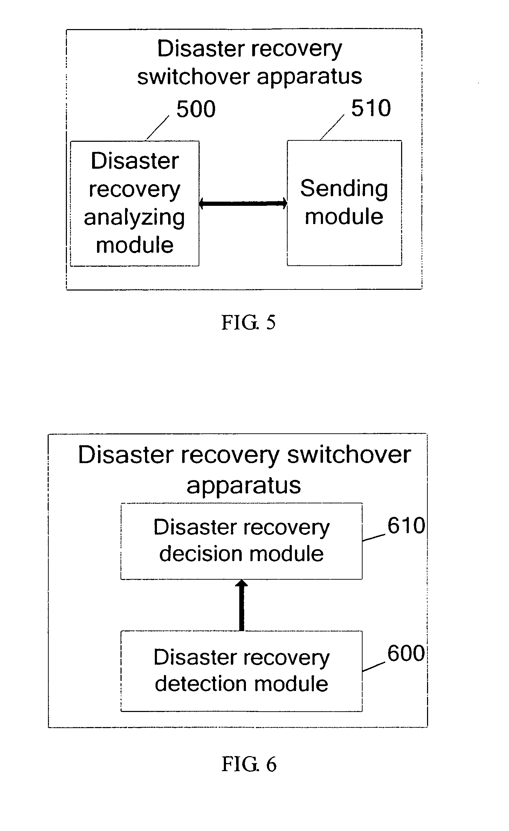

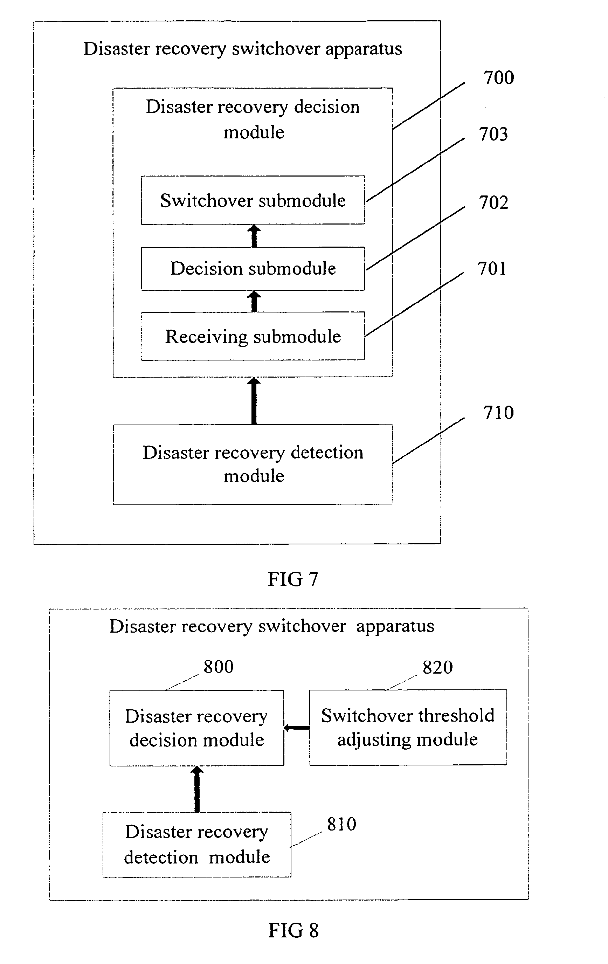

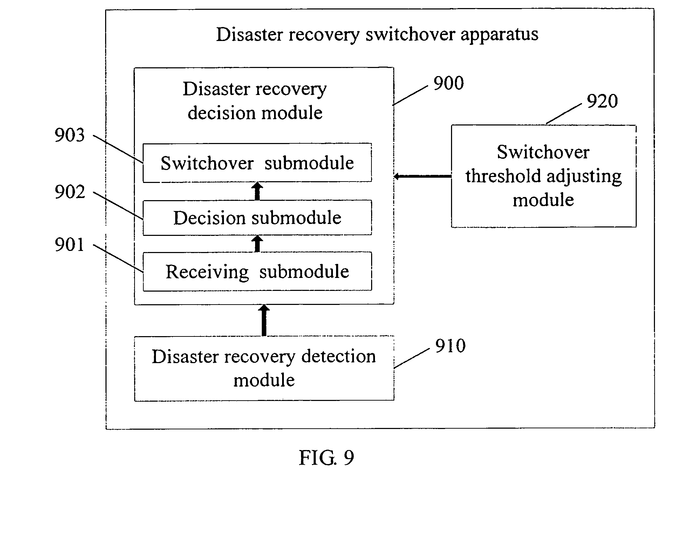

In this embodiment, a detailed structure of an apparatus which is disposed in the application server, for processing the disaster recovery switchover is illustrated as in Figure 5. A detailed structure of an apparatus which is disposed in the disaster recovery server, for processing the disaster recovery switchover is illustrated as in Figures 6 and 7. These two structures are not repeated here again. Further, the disaster recovery server may further include a switchover threshold adjustment module, and a detailed structure of an apparatus which is disposed in the disaster recovery server, for processing the disaster recovery switchover is illustrated as in Figure 9.

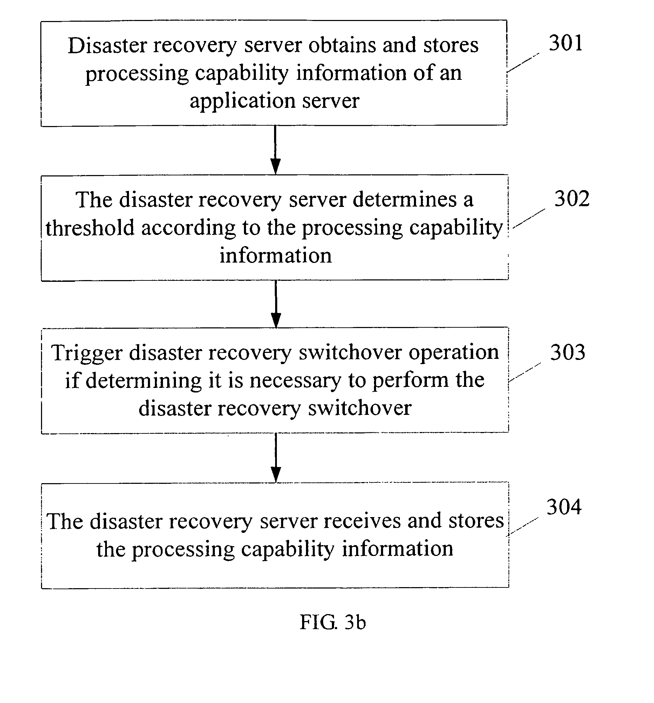

Referring to Figure 3b, a flow chart for illustrating working principles of the system shown in Figure 3a is illustrated, in which the method for processing the disaster recovery switchover includes as follows:
301: The disaster recovery server 300 obtains and stores the processing capability information of the application server 310. Specifically, the disaster recovery server 300 may send an obtaining message to the application server 310 periodically or irregularly. The application server 310 returns the processing capability information of the application server 310 to the disaster recovery server 300 according to the obtaining message; or the application server 310 sends the processing capability information of the application server 310 to the disaster recovery server 300 periodically or irregularly.
302: The disaster recovery server 300 obtains the processing capability information of the application server 310, and determines the disaster recovery switchover threshold according to the processing capability information. The disaster recovery switchover threshold may be called a dynamic switchover threshold.
303: When a fault occurs on the application server 310 or the link between the application triggering equipment and application server 310 is abnormal, the application triggering equipment may send the signals to the disaster recovery server 300. The disaster recovery server 300 receives and makes statistics of the number of the signals sent by the application triggering equipment. If the disaster recovery switchover is determined to be triggered according to the statistics result and the disaster recovery switchover threshold (for example, to trigger the disaster recovery switchover if the statistics result reaches or exceeds the disaster recovery switchover threshold), the disaster recovery server 300 triggers the disaster recovery switchover replace the application server 310 to process services of the application triggering equipment.

Specifically, the method may further include the following step:
304: The application server 310 obtains its own processing capability information through analysis and submits the processing capability information to the disaster recovery server 300. The information is stored by the disaster recovery server 300. The analysis manner employed by the application server 310 may be periodical analysis or non-periodical analysis. The periodical analysis refers to analyze the processing capability of the application server 300 in a fixed period, for example one analysis per minute, so as to determine the current processing capability information of the application server. For example, the application server 310 may receive 1000 Call Attempt Per Second (CAPS) signals, but it may only process 300 CAPS signals because of limited capability of the server; therefore, the processing capability of the application server is 300 CAPS. Periodical analysis may obtain real-time processing capability information of the application server 310. The non-periodical analysis refers to analyze the processing capability information of the application server 310 in a non-fixed period manner.

Further, step 302 above may be detailed as follows:

A switchover threshold percentage is set in the disaster recovery server 300, the disaster recovery server 300 determines the disaster recovery switchover threshold according to the multiply product of the processing capability of the application server and the switchover threshold percentage. For example, if the current processing capability of the application server is 600 CAPS and the preset switchover threshold percentage is 50%, the disaster recovery switchover threshold is 600*50%=300 CAPS. When the network is idle and call traffic is small, the number of signals received by the disaster recovery server 300 from the application triggering equipment is small; when the network is busy and call traffic is large, the number of signals received by the disaster recovery server 300 from the application triggering equipment is large. Through the step 302, the disaster recovery server 300 may dynamically adjust the disaster recovery switchover threshold according to the processing capability information and the percentage of the switchover threshold, so as to meet different disaster recovery switchover threshold in the case of busy network to avoid not timely or inappropriate disaster recovery switchover.

Alternatively, in order to ensure the accuracy of the disaster recovery switchover, a minimum switchover threshold is preset on the basis of the step 302. If the disaster recovery server 300 determines that the dynamic disaster recovery switchover threshold determined according to the processing capability information of the application server 310 is smaller than the preset minimum switchover threshold, the preset minimum switchover threshold is set to be an actual disaster recovery switchover threshold; otherwise, the dynamic disaster recovery switchover threshold is set to be an actual disaster recovery switchover threshold. In the case where the preset minimum switchover threshold is set to be the actual disaster recovery switchover threshold, the disaster recovery server performs disaster recovery switchover further when determining to trigger the disaster recovery switchover according to the number of signals received from the application triggering equipment and the minimum switchover threshold, which prevents inappropriate triggering of the disaster recovery switchover due to its sensitivity. In the case where the dynamic disaster recovery switchover threshold is set to be the actual disaster recovery switchover threshold, the disaster recovery server performs disaster recovery switchover further when determining to trigger the disaster recovery switchover according to the number of signals received from the application triggering equipment and the dynamic disaster recovery switchover threshold.

Referring to the accompanying drawings and taking the processing of disaster recovery switchover in an Intelligent Network as an example, the method provided in the embodiments of the present invention is further detailed. The application triggering equipment in this embodiment is SSP, in the case that the application triggering equipment is SoftSwitch, SCP etc, the disaster recovery process of this invention is the same as the case that the application triggering equipment is SSP.

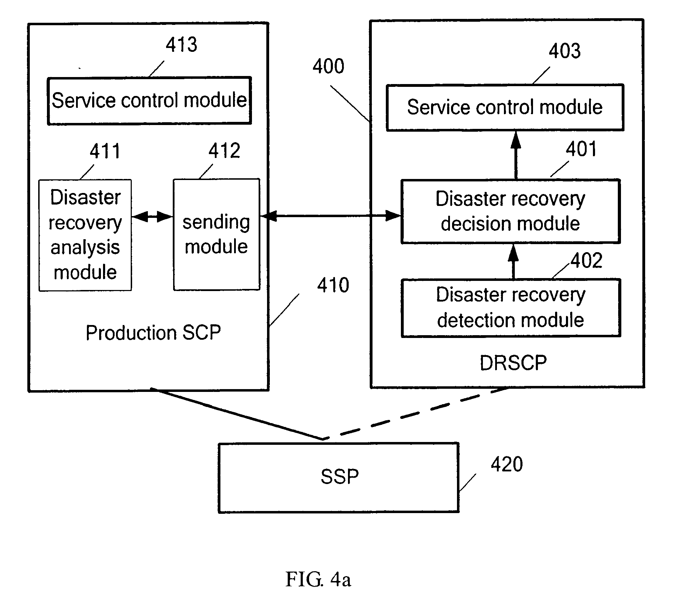

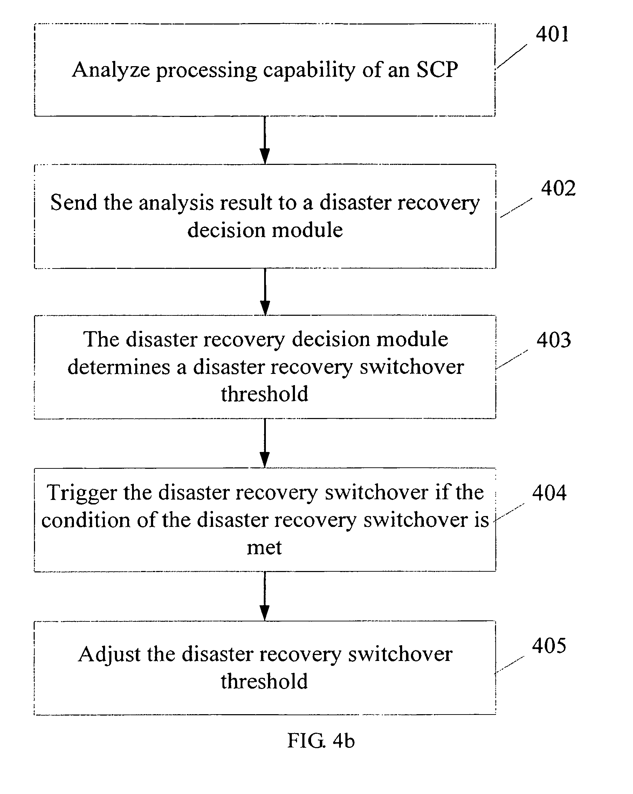

Referring to Figure 4a, a structural view of a system for processing disaster recovery switchover in an Intelligent Network is illustrated. In the case where no fault occurs at a production SCP 410 acting as a application server, i.e. before the disaster recovery switchover, an SSP 420 acting as application triggering equipment sends a signal to the production SCP 410, and a service control module 413 of the SCP processes the service.

For the purpose of implementing accurate disaster recovery switchover by using the method provided in embodiments of the present invention, a disaster recovery analysis module 411 is added at the production SCP 410, and a disaster recovery decision module 401 is added at a DRSCP 400 acting as a disaster recovery server. Referring to 4b, a flow chart for illustrating working principles of the system shown in Figure 4a is illustrated. The method includes the following steps:
401: The disaster recovery analysis module 411 at the production SCP 410 periodically analyzes the processing capability of the production SCP 410, for example, the number of signals that the production SCP 410 may process accurately.
402: The disaster recovery analysis module 411 at the production SCP 410 sends the analysis result to the disaster recovery decision module 401 at the DRSCP 400 via a sending module 412.
403: The disaster recovery decision module 401 at the DRSCP 400 receives and stores the processing capability information of the production SCP 410 as a determination basis in the case of the disaster recovery switchover. The disaster recovery decision module 401 at the DRSCP 400 provides the percentage of the switchover threshold, for example the percentage of the switchover threshold preset in the disaster recovery decision module 401, as a configurable decision basis; and determines the disaster recovery switchover threshold according to the product of the percentage of the switchover threshold and the processing capability information of the production SCP 410. For example, the processing capability of the production SCP 410 is 600CAPS, and the preconfigured percentage of the switchover threshold is 50%, the disaster recovery switchover threshold is 600*50=300CAPS.
404: When receiving signals sent from an SSP 420, the disaster recovery detection module 402 at the DRSCP 400 make statistics of the number of the signals, for example, figure out the number of signals that the DRSCP receives per second in average. If the disaster recovery decision module 401 determines according to the statistics result that the number of the signals reaches or exceeds a current disaster recovery switchover threshold, for example, the product of the current production SCP 410 and the percentage of the switchover threshold, the disaster recovery switchover condition is satisfied and the disaster recovery decision module 401 triggers the disaster recovery switchover, and a service control module 403 at the DRSCP 400 processes the signals sent from the SSP 420.

Alternatively in 405: The disaster recovery decision module 401 at the DRSCP 400 may also configure a minimum switchover threshold. If the disaster recovery switchover threshold determined dynamically by the disaster recovery decision module 401 according to the processing capability and the percentage of the switchover threshold current production SCP 410 is smaller than the minimum switchover threshold preset by the DRSCP 400, the minimum switchover threshold preset by the DRSCP 400 is taken as a threshold for triggering the disaster recovery switchover; otherwise, the disaster recovery switchover threshold dynamically determined is taken as a threshold for triggering the disaster recovery switchover. Such setting manner of the minimum switchover threshold may overcome the sensitivity of the disaster recovery switchover in the case of idle network, so as to avoid inappropriate triggering of the disaster recovery switchover.

Referring to Figure 5, an apparatus for processing disaster recovery switchover is provided in an embodiment of the present invention. The apparatus may be arranged in an application server (310 or 410) in an Intelligent Network, or may be arranged separately from the application server (310 or 410). The apparatus includes a disaster recovery analysis module 500 and a sending module 510.

The disaster recovery analysis module 500 is configured to obtain processing capability information of an application server. Specifically, the disaster recovery analysis module 500 may, periodically or irregularly analyzes the processing capability of the application server, and sends obtained processing capability information to a disaster recovery server via the sending module 510.

The sending module is configured to send the processing capability information of the application server to the disaster recovery server.

The application server (310 or 410) may further include a service control module, configured to receive service signals and provide the services.

Referring to Figure 6, another apparatus for processing disaster recovery switchover is provided. The apparatus may be arranged in a disaster recovery server (300 or 400) in an Intelligent Network, or may be arranged separately from the disaster recovery server (300 or 400). The apparatus includes a disaster recovery detection module 600 and a disaster recovery decision module 610.

The disaster recovery detection module 600 is configured to receive signals sent by application triggering equipment, and make statistics of the number of the received signals. In this embodiment, the application triggering equipment is connected with the application server and the disaster recovery server. When a fault occurs in the application server or the link between each application triggering equipment and the application server is faulty, the application triggering equipment may send signals to the disaster recovery server. The disaster recovery detection module 600 receives and makes statistics of the number of the signals sent from the application triggering equipment to obtain a statistics result, for example, the number of signals that the disaster recovery server receives per second in average.

The disaster recovery decision module 610 is configured to determine a disaster recovery switchover threshold according to the processing capability information of the application server, and perform the disaster recovery switchover if determining, according to the statistics result (the number of the signals) from the disaster recovery detection module 600 and the disaster recovery switchover threshold, that the disaster recovery switchover needs to be triggered, for example, the statistics result reaches or exceeds the disaster recovery switchover threshold.

The disaster recovery server (300 or 400) may further include a service control module, configured to provide services after the disaster recovery decision module determiners to trigger the disaster recovery switchover.

Referring to Figure 7, in this embodiment, a disaster recovery decision module 700 in the apparatus for processing disaster recovery switchover includes: a receiving sub-module 701, a decision sub-module 702, and a switching sub-module.

The receiving sub-module 701 is configured to receive and store the processing capability information of the application server.

The decision sub-module is configured to preset the static disaster recovery switchover threshold or determine the disaster recovery switchover threshold according to the processing capability information received by the receiving sub-module; and determine whether to trigger the disaster recovery switchover according to the number of the signals according to the statistics result from the disaster detection module and the determined disaster recovery switchover threshold.

The switching sub-module is configured to perform the disaster recovery switchover according to the determination result from the decision sub-module.

Referring to Figure 8, the apparatus for processing disaster recovery switchover as shown in Figure 6 further includes a switchover threshold adjustment module, configured to set the minimum switchover threshold to be the disaster recovery switchover threshold if the determined disaster recovery switchover threshold, for example, the disaster recovery switchover threshold obtained dynamically according to the processing capability information of the application server, is smaller than a minimum switchover threshold.

Based on the descriptions of the foregoing embodiments, those skilled in art may be clear that the embodiments of the invention can be implemented by software on a necessary general hardware platform or implemented by hardware only. Based on such understanding, the essence of the foregoing technical solution, or contributions to the related art by the solution may be represented by a software product, which may be stored in a computer-readable storage medium, such as a Read-Only Memory/Random Access Memory (ROM/RAM), a magnetic disk, and a compact disk. The software product includes a number of instructions that enable a computer device, which may be a personal computer, a server or a network device, to execute the method according to the embodiments of the invention or a certain part of an embodiment of the invention.

In conclusion, according to the method, system and apparatus provided in various embodiments of the present invention, by obtaining processing capability information of an application server and determining the disaster recovery switchover threshold according to the processing capability information of the application server, the processing capability information is taken as a decision basis for the disaster recovery switchover to dynamically adjust the disaster recovery switchover threshold as the disaster recovery switchover threshold varies. This avoids the problems of inappropriate switchover in the case of busy network and no switchover in the case of idle network, and ensures the accuracy of triggering the disaster recovery switchover and prompt processing of related services. This method offers a reliable detection and decision mechanism for the disaster recovery switchover triggered by the signal so that the disaster recovery decision is not merely made depending on the static switchover threshold. The disaster recovery decision made in combination with the processing capability information of the production SCP so as to dynamically adjust the disaster recovery switchover threshold, thereby ensuring the accuracy and validity of the disaster recovery switchover.

## Claims

1. A method for processing disaster recovery switchover, **characterized by** comprising:
receiving and storing (301), by a disaster recovery server, the processing capability information of an application server;
determining (302), by the disaster recovery server, a disaster recovery switchover threshold; and
performing (303) disaster recover switchover if the disaster recovery server determines to trigger the disaster recover switchover to replace the application server to process services of the application triggering equipment according to the number of signals sent by application triggering equipment and the determined disaster recovery switchover threshold.

2. The method according to claim 1, **characterized in that** the process of determining the disaster recovery switchover threshold comprises:
determining the disaster recovery switchover threshold according to obtained processing capability information of the application server; or
presetting a static disaster recovery switchover threshold.

3. The method according to one of the claims 1 to 2, **characterized in that** the process of determining a disaster recovery switchover threshold according to obtained processing capability information of an application server comprises:
determining, by the disaster recovery server, the disaster recovery switchover threshold according to a product of a preset threshold percentage and the processing capability information of the application server.

4. The method according to one of the claims 1 to 3, **characterized in that** before the process of determining to trigger the disaster recover switchover, the method further comprises:
setting, by the disaster recovery server, a minimum switchover threshold to be the disaster recovery switchover threshold if the determined disaster recovery switchover threshold is smaller than the minimum switchover threshold.

5. An application server, **characterized by** comprising:
a server control module (413), configured to receive service signals from an application triggering equipment and provide the services;
a disaster recovery analysis module (411, 500), configured to obtain processing capability information of an application server, the processing capability information of the application server being used for a disaster recovery to determine a disaster recovery switchover threshold; and
a sending module (412, 510), configured to send the processing capability information of the application server to the disaster recovery server.

6. A disaster recovery server, **characterized by** comprising:
a disaster recovery detection module (402,600,710,810,910), configured to receive signals sent by application triggering equipment, and make statistics of the number of the received signals;
a disaster recovery decision module (401,610,700,800,900), configured to preset a static disaster recovery switchover threshold or determine the disaster recovery switchover threshold according to processing capability information of an application server received; and perform the disaster recovery switchover if determining to trigger the disaster recover switchover to replace the application server to process services of the application triggering equipment according to the statistics result from the disaster detection module (402,600,710,810,910) and the determined disaster recovery switchover threshold; and
a service control module(403), configured to provide services after the disaster recovery decision module (401,610,700,800,900) determines to trigger the disaster recovery switchover.

## Patentansprüche

1. Verfahren zum Verarbeiten eines Disaster-Recovery-Überwechsels, **gekennzeichnet durch** die folgenden Schritte:
Empfangen und Speichern (301) der Verarbeitungsfähigkeitsinformationen eines Anwendungsservers **durch** einen Disaster-Recovery-Server;
Bestimmen (302) einer Disaster-Recovery-Überwechselschwelle **durch** den Disaster-Recovery-Server; und
Durchführen (303) eines Disaster-Recovery-Überwechsels, wenn der Disaster-Recovery-Server bestimmt, den Disaster-Recovery-Überwechsel zu triggern, um den Anwendungsserver zu ersetzen, um Dienste der Anwendungstriggergeräte gemäß der Anzahl der **durch** Anwendungstriggergeräte gesendeten Signale und der bestimmten Disaster-Recovery-Überwechselschwelle zu verarbeiten.

2. Verfahren nach Anspruch 1, **dadurch gekennzeichnet, dass** der Prozess des Bestimmens der Disaster-Recovery-Überwechselschwelle Folgendes umfasst:
Bestimmen der Disaster-Recovery-Überwechselschwelle gemäß erhaltenen Verarbeitungsfähigkeitsinformationen des Anwendungsservers; oder
Voreinstellen einer statischen Disaster-Recovery-Überwechselschwelle.

3. Verfahren nach einem der Ansprüche 1 bis 2, **dadurch gekennzeichnet, dass** der Prozess des Bestimmens einer Disaster-Recovery-Überwechselschwelle gemäß erhaltenen Verarbeitungsfähigkeitsinformationen eines Anwendungsservers Folgendes umfasst:
Bestimmen der Disaster-Recovery-Überwechselschwelle durch den Disaster-Recovery-Server gemäß einem Produkt eines voreingestellten Schwellenprozentsatzes und den Verarbeitungsfähigkeitsinformationen des Anwendungsservers.

4. Verfahren nach einem der Ansprüche 1 bis 3, **dadurch gekennzeichnet, dass** das Verfahren vor dem Prozess des Bestimmens, den Disaster-Recovery-Überwechsel zu triggern, ferner Folgendes umfasst:
Setzen einer minimalen Überwechselschwelle als die Disaster-Recovery-Überwechselschwelle durch den Disaster-Recovery-Server, wenn die bestimmte Disaster-Recovery-Überwechselschwelle kleiner als die minimale Überwechselschwelle ist.

5. Anwendungsserver, **dadurch gekennzeichnet, dass** er Folgendes umfasst:
ein Serversteuermodul (413), das dafür ausgelegt ist, Signale von einem Anwendungstriggergerät zu empfangen und die Dienste bereitzustellen;
ein Disaster-Recovery-Analysemodul (411, 500), das dafür ausgelegt ist,
Verarbeitungsfähigkeitsinformationen eines Anwendungsservers zu erhalten, wobei die Verarbeitungsfähigkeitsinformationen des Anwendungsservers für ein Disaster-Recovery verwendet werden, um eine Disaster-Recovery-Überwechselschwelle zu bestimmen; und
ein Sendemodul (412, 510), das dafür ausgelegt ist, die Verarbeitungsfähigkeitsinformationen des Anwendungsservers zu dem Disaster-Recovery-Server zu senden.

6. Disaster-Recovery-Server, **dadurch gekennzeichnet, dass** er Folgendes umfasst:
ein Disaster-Recovery-Detektionsmodul, (402, 600, 710, 810, 910), das dafür ausgelegt ist, durch Anwendungstriggergeräte gesendete Signale zu empfangen und Statistiken der Anzahl der empfangenen Signale zu erstellen;
ein Disaster-Recovery-Entscheidungsmodul (401, 610, 700, 800, 900), das dafür ausgelegt ist, eine statische Disaster-Recovery-Überwechselschwelle voreinzustellen oder
die Disaster-Recovery-Überwechselschwelle gemäß empfangenen Verarbeitungsfähigkeitsinformationen eines Anwendungsservers zu bestimmen; und den Disaster-Recovery-Überwechsel durchzuführen, wenn bestimmt wird, den Disaster-Recovery-Überwechsel zu triggern, um den Anwendungsserver zu ersetzen, um Dienste der Anwendungstriggergeräte gemäß dem Statistikergebnis von dem Disaster-Detektionsmodul (402, 600, 710, 810, 910) und der bestimmten Disaster-Recovery-Überwechselschwelle zu verarbeiten; und
ein Dienststeuermodul (403), das dafür ausgelegt ist, Dienste bereitzustellen, nachdem das Disaster-Recovery-Entscheidungsmodul (401, 610, 700, 800, 900) bestimmt, den Disaster-Recovery-Überwechsel zu triggern.

## Revendications

1. Procédé de traitement d'une commutation de reprise après sinistre, **caractérisé en ce qu'**il comprend :
la réception et la mémorisati
on (301), par un serveur de reprise après sinistre, des informations de capabilité de traitement d'un serveur d'application ;
la détermination (302), par le serveur de reprise après sinistre, d'un seuil de commutation de reprise après sinistre ; et
l'exécution (303) d'une commutation de reprise après sinistre si le serveur de reprise après sinistre détermine qu'il convient de déclencher la commutation de reprise après sinistre afin de remplacer le serveur d'application pour le traitement des services de l'équipement de déclenchement d'application en fonction du nombre de signaux envoyés par l'équipement de déclenchement d'application et du seuil de commutation de reprise après sinistre déterminé.

2. Procédé selon la revendication 1, **caractérisé en ce que** le processus de détermination du seuil de commutation de reprise après sinistre comprend :
la détermination du seuil de commutation de reprise après sinistre en fonction d'informations obtenues de capabilité de traitement du serveur d'application ; ou
le préréglage d'un seuil de commutation de reprise après sinistre statique.

3. Procédé selon l'une quelconque des revendications 1 et 2, **caractérisé en ce que** le processus de détermination d'un seuil de commutation de reprise après sinistre en fonction d'informations obtenues de capabilité de traitement d'un serveur d'application comprend :
la détermination, par le serveur de reprise après sinistre, du seuil de commutation de reprise après sinistre en fonction d'un produit d'un pourcentage de seuil préétabli et des informations de capabilité de traitement du serveur d'application.

4. Procédé selon l'une quelconque des revendications 1 à 3, **caractérisé en ce qu'**avant le processus de détermination qu'il convient de déclencher la commutation de reprise après sinistre, le procédé comprend en outre :
l'établissement, par le serveur de reprise après sinistre, d'un seuil de commutation minimum comme seuil de commutation de reprise après sinistre si le seuil de commutation de reprise après sinistre déterminé est inférieur au seuil de commutation minimum.

5. Serveur d'application, **caractérisé en ce qu'**il comprend :
un module de commande de serveur (413), configuré pour recevoir des signaux de service depuis un équipement de déclenchement d'application, et assurer les services ;
un module d'analyse de reprise après sinistre (411, 500), configuré pour obtenir des informations de capabilité de traitement d'un serveur d'application, les informations de capabilité de traitement du serveur d'application étant utilisées pour une reprise après sinistre afin de déterminer un seuil de commutation de reprise après sinistre ; et
un module d'envoi (412, 510), configuré pour envoyer les informations de capabilité de traitement du serveur d'application au serveur de reprise après sinistre.

6. Serveur de reprise après sinistre, **caractérisé en ce qu'**il comprend :
un module de détection de reprise après sinistre (402, 600, 710, 810, 910), configuré pour recevoir des signaux envoyés par l'équipement de déclenchement d'application, et établir des statistiques du nombre de signaux reçus ;
un module de décision de reprise après sinistre (401, 610, 700, 800, 900), configuré pour préétablir un seuil de commutation de reprise après sinistre statique ou déterminer le seuil de commutation de reprise après sinistre en fonction des informations de capabilité de traitement d'un serveur d'application reçues ; et exécuter la commutation de reprise après sinistre s'il est déterminé qu'il convient de déclencher la commutation de reprise après sinistre afin de remplacer le serveur d'application pour le traitement des services de l'équipement de déclenchement d'application en fonction des résultats statistiques provenant du module de détection de sinistre (402, 600, 710, 810, 910) et du seuil de commutation de reprise après sinistre déterminé ; et
un module de commande de services (403), configuré pour assurer les services après que le module de décision de reprise après sinistre (401, 610, 700, 800, 900) détermine qu'il convient de déclencher la commutation de reprise après sinistre.
